(19) **Europäisches Patentamt / European Patent Office / Office européen des brevets**

(11) **EP 4 026 310 B1**

(12) **EUROPEAN PATENT SPECIFICATION**

(45) Date of publication and mention
of the grant of the patent:
**25.02.2026 Bulletin 2026/09**

(21) Application number: **20886092.4**

(22) Date of filing: **03.11.2020**

(51) International Patent Classification (IPC):
**H04N 23/45** $^{(2023.01)}$   **H04N 23/90** $^{(2023.01)}$

(52) Cooperative Patent Classification (CPC):
**H04N 5/265; G08G 1/04; H04N 23/45; H04N 23/90**

(86) International application number:
**PCT/CN2020/126226**

(87) International publication number:
**WO 2021/088821 (14.05.2021 Gazette 2021/19)**

(54) **SYSTEMS AND METHODS FOR IMAGE PROCESSING**

SYSTEME UND VERFAHREN ZUR BILDVERARBEITUNG

SYSTÈMES ET PROCÉDÉS DE TRAITEMENT D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.11.2019 CN 201911069307**

(43) Date of publication of application:
**13.07.2022 Bulletin 2022/28**

(73) Proprietor: **Zhejiang Dahua Technology Co., Ltd.
Hangzhou, Zhejiang 310053 (CN)**

(72) Inventors:
• **YE, Dong
Hangzhou, Zhejiang 310053 (CN)**
• **ZHAN, Hui
Hangzhou, Zhejiang 310053 (CN)**

• **WEI, Xiyang
Hangzhou, Zhejiang 310053 (CN)**
• **DING, Naiying
Hangzhou, Zhejiang 310053 (CN)**

(74) Representative: **Wang, Bo
Panovision IP
Ebersberger Straße 3
85570 Markt Schwaben (DE)**

(56) References cited:
| | |
|---|---|
| WO-A1-2014/083489 | CN-A- 106 791 376 |
| CN-A- 107 087 107 | CN-A- 110 855 883 |
| CN-A- 111 563 552 | US-A1- 2010 013 927 |
| US-A1- 2018 070 018 | US-A1- 2018 096 487 |
| US-A9- 2010 060 746 | |

**Description**

**CROSS-REFERENCE TO RELATED APPLICATIONS**

**TECHNICAL FIELD**

The present disclosure generally relates to monitoring technology, and in particular, to systems and methods for image capturing and processing.

**BACKGROUND**

With the development of science and communication technologies, traffic monitoring becomes more and more important. Commonly, a traffic monitoring system records and monitors traffic violations using capture devices (e.g., cameras). However, when vehicles are relatively far away from the capture device, the capture device cannot provide sharp and/or accurate images associated with vehicle information of the vehicles. Therefore, it is desirable to provide effective systems and methods for image capturing and processing, thereby improving the sharpness and accuracy of captured images. US 2018/096487 A1, US 2010/013927 A1, WO 2014/083489 A1, and US 2008/174670 A1 disclose a system with a first camera with a first FOV a second camera with a second FOV, the system capable of a simultaneous capture of images by the two cameras and an image fusion.

**SUMMARY**

In one aspect of the present disclosure, a system according to claim 1 is provided.

In another aspect of the present disclosure, a method according to claim 6 implemented on a computing device including at least one storage device and at least one processor is provided.

In another aspect of the present disclosure, a non-transitory computer readable medium according to claim 11 is provided.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities, and combinations set forth in the detailed examples discussed below.

**BRIEF DESCRIPTION OF THE DRAWINGS**

The methods, systems, and/or programming described herein are further described in terms of exemplary embodiments. These exemplary embodiments are described in detail with reference to the drawings. These embodiments are non-limiting exemplary embodiments, in which like reference numerals represent similar structures throughout the several views of the drawings, and wherein:

FIG. 1 is a schematic diagram illustrating an exemplary image processing system according to some embodiments of the present disclosure;

FIG. 2 is a schematic diagram illustrating exemplary hardware and/or software components of an exemplary computing device according to some embodiments of the present disclosure;

FIG. 3 is a schematic diagram illustrating exemplary hardware and/or software components of an exemplary terminal device according to some embodiments of the present disclosure;

FIG. 4 is a block diagram illustrating an exemplary processing device according to some embodiments of the present disclosure;

FIG. 5 is a flowchart illustrating an exemplary process for image processing according to some embodiments of the present disclosure;

FIG. 6 is a schematic diagram illustrating exemplary FOVs of a first capture device and a second capture device according to some embodiments of the present disclosure;

FIG. 7 is a schematic diagram illustrating an exemplary process for determining a target image according to some embodiments of the present disclosure;

FIG. 8 is a block diagram illustrating an exemplary fusion module according to some embodiments of the present disclosure; and

FIG. 9 is a flowchart illustrating an exemplary process for generating a target image according to some embodiments of the present disclosure.

## DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well-known methods, procedures, systems, components, and/or circuitry have been described at a relatively high-level, without detail, in order to avoid unnecessarily obscuring aspects of the present disclosure. Various modifications to the disclosed embodiments will be readily apparent to those skilled in the art, and the general principles defined herein may be applied to other embodiments and applications without departing from the scope of the present disclosure. Thus, the present disclosure is not limited to the embodiments shown, but to be defined by the scope of the appended claims.

It will be understood that the terms "system," "engine," "unit," "module," and/or "block" used herein are one method to distinguish different components, elements, parts, sections, or assemblies of different levels in ascending order. However, the terms may be displaced by other expression(s) if they may achieve the same purpose.

Generally, the words "module," "unit," or "block," as used herein, refer to logic embodied in hardware or firmware, or to a collection of software instructions. A module, a unit, or a block described herein may be implemented as software and/or hardware and may be stored in any type of non-transitory computer-readable medium or other storage device(s). In some embodiments, a software module/unit/block may be compiled and linked into an executable program. It will be appreciated that software modules can be callable from other modules/units/blocks or from themselves, and/or may be invoked in response to detected events or interrupts. Software modules/units/blocks configured for execution on computing devices may be provided on a computer-readable medium, such as a compact disc, a digital video disc, a flash drive, a magnetic disc, or any other tangible medium, or as a digital download (and can be originally stored in a compressed or installable format that needs installation, decompression, or decryption prior to execution). Such software code may be stored, partially or fully, on a storage device of the executing computing device, for execution by the computing device. Software instructions may be embedded in firmware, such as an EPROM. It will be further appreciated that hardware modules (or units or blocks) may be included in connected logic components, such as gates and flip-flops, and/or can be included in programmable units, such as programmable gate arrays or processors. The modules (or units or blocks) or computing device functionality described herein may be implemented as software modules (or units or blocks), but may be represented in hardware or firmware. In general, the modules (or units or blocks) described herein refer to logical modules (or units or blocks) that may be combined with other modules (or units or blocks) or divided into sub-modules (or sub-units or sub-blocks) despite their physical organization or storage.

It will be understood that when a unit, engine, module, or block is referred to as being "on," "connected to," or "coupled to" another unit, engine, module, or block, it may be directly on, connected or coupled to, or communicate with the other unit, engine, module, or block, or an intervening unit, engine, module, or block may be present, unless the context clearly indicates otherwise. As used herein, the term "and/or" includes any and all combinations of one or more of the associated listed items.

The terminology used herein is for the purposes of describing particular examples and embodiments only and is not intended to be limiting. As used herein, the singular forms "a," "an," and "the" may be intended to include the plural forms as well, unless the context clearly indicates otherwise. It will be further understood that the terms "include" and/or "comprise," when used in this disclosure, specify the presence of integers, devices, behaviors, stated features, steps, elements, operations, and/or components, but do not exclude the presence or addition of one or more other integers, devices, behaviors, features, steps, elements, operations, components, and/or groups thereof.

In the present disclosure, a representation of an object (e.g., a person, a vehicle, a license plate, a road, a lane line) in an image may be referred to as an "object" for brevity. For instance, a representation of a license plate in an image may be referred to as a "license plate" for brevity. Further, an operation performed on a representation of an object in an image may be referred to as an "operation performed on the object" for brevity. For instance, an identification of a portion of an image including a representation of a lane line from the image may be referred to as an "identification of a lane line" for brevity.

An aspect of the present disclosure relates to a system and method for image processing. The system may include a first capture device (e.g., a wide-angle camera) with a first focal length and a first field of view (FOV), and a second capture device (e.g., a long-focus camera) with a second focal length and a second FOV. The second focal length may be larger than the first focal length and the second FOV may be less than the first FOV. The system may obtain a first image captured by the first capture device and a second image captured by the second capture device. The first image and the second image may correspond to the same time point. The system may also generate a target image by fusing the first image and the second image.

According to some embodiments of the present disclosure, in combination with the wide-angle camera and the long-focus camera, the first image corresponds to a relatively large coverage and the second image corresponds to a relatively high sharpness. Accordingly, by fusing the first image and the second image, the target image involves both the large coverage and the high sharpness, which improves the accuracy and efficiency of traffic monitoring. Further, even though objects are relatively far way form the wide-angle camera and the long-focus camera, accurate and clear information of the objects (e.g., a vehicle, a driver, a license plate) can be obtained from the target image.

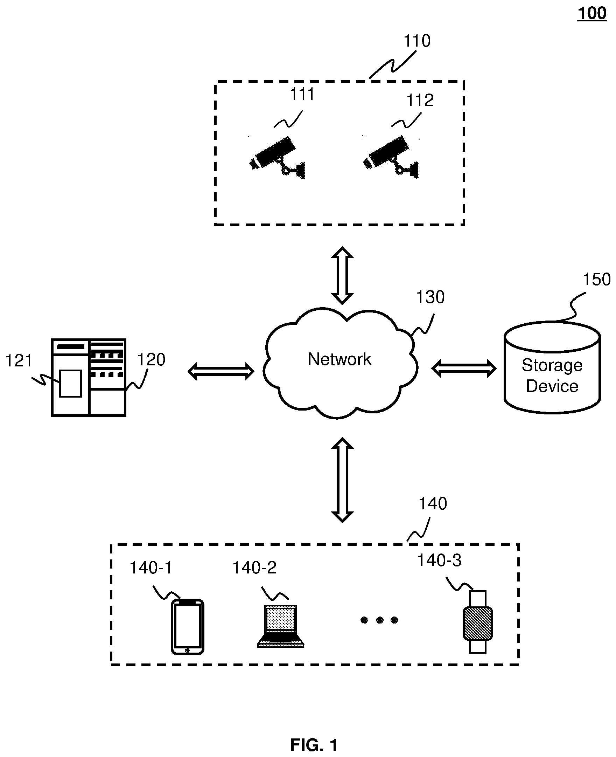

FIG. 1 is a schematic diagram illustrating an exemplary image processing system according to some embodiments of the present disclosure. The image processing system may be applied in various application scenarios, for example, communication, surveillance (e.g., traffic surveillance, office building surveillance, shopping mall surveillance), etc. For illustration purposes, the present disclosure is described with reference to an image processing system 100 applied in traffic surveillance for monitoring traffic violations. As illustrated in FIG. 1, the image processing system 100 may include at least two capture devices 110, a server 120, a network 130, a user device 140, and a storage device 150.

The at least two capture devices 110 may be configured to capture images and/or videos. Each of the at least two capture devices 110 may include a gun camera, a dome camera, an integrated camera, or the like, or any combination thereof. In some embodiments, the at least two capture devices 110 may include a first capture device 111 and a second capture device 112. In some embodiments, the at least two capture devices 110 may be separate capture devices or integrated into an integrated device. For example, the first capture device 111 and the second capture device may be integrated into a binocular capture device. In some embodiments, the at least two capture devices may be the same or different from each other. For example, the first capture device 111 may be a wide-angle camera and the second capture device 112 may be a long-focus camera.

In some embodiments, the first capture device 111 may include at least one first capture parameter such as a first focal length, a first FOV, a first depth of field, etc. The second capture device 112 may include at least one second capture parameter such as a second focal length, a second FOV, the second depth of field, etc. The at least one first capture parameter and the at least one second capture parameter may be totally the same, partially the same, totally different, or partially different. For example, the second focal length may be larger than the first focal length, the second FOV may be less than the first FOV, and the second depth of field may be less than the first depth of field. In some embodiments, the first focal length may be within a first range and the second focal length may be within a second range, wherein the first range may be less than and/or partially intersect with the second range. For example, the first range may be 6 mm-25 mm and the second range may be 25 mm-70 mm. As another example, the first range may be 13 mm-40 mm and the second range may be 25 mm-310 mm. In some embodiments, the first FOV and the second FOV may be partially overlapped with each other. In some embodiments, the first FOV may cover at least a portion of the second FOV. For example, the second FOV may be totally within the first FOV. As another example, a portion of the second FOV may be within the first FOV.

In some embodiments, the first capture device 111 and the second capture device 112 may be arranged in vertical, arranged horizontally, or arranged with an angle. For example, the first capture device 111 and the second capture device 112 may be arranged in left and right respectively with respect to a reference line (e.g., a line parallel to a road). As another example, the first capture device 111 and the second capture device 112 may be arranged up and down along a reference line (e.g., a line vertical to a road). As a further example, the second capture device 112 may be located at the upper right of the first capture device 111. In some embodiments, the first capture device 111 and the second capture device 112 may be connected fixedly or adjustably. For example, a relative angle (or location) between the first capture device 111 and the second capture device 112 may be adjusted using an adjustable support bracket by adjusting directions (or locations) of the first capture device 111 and the second capture device 112 individually or simultaneously. In some embodiments, the relative angle (or location) between the first capture device 111 and the second capture device 112 may be reflected by an angle between a first optical axis of the first capture device 111 and a second optical axis of the second capture device 112. The angle between the first optical axis of the first capture device 111 and the second optical axis of the second capture device 112 may be within a range from 0° to 15°. In some embodiments, whether it is needed to adjust the relative angle (or location) between the first capture device 111 and the second capture device 112 may be determined according to different factors (e.g., FOVs of the first capture device 111 and the second capture device 112, a distance from the first capture device 111 or the second capture device 112 to objects to be captured, a lane width).

In some embodiments, the first capture device 111 and the second capture device 112 may be configured to capture images and/or videos continuously or intermittently (e.g., according to a predetermined time interval). For example, at a specific time point, the first capture device 111 may capture a first image and the second device 112 may capture a second image. In some embodiments, since the at least one first capture parameter of the first capture device 111 may be different from the at least one second capture parameter of the second capture device, the first image and the second image may correspond to different image parameters. For example, as described above, for the first capture device 111, the first focal length is relatively small, the first FOV is relatively large, and the first depth of field is relatively large; for the second capture device 112, the second focal length is relatively large, the second FOV is relatively small, and the second depth of field is relatively small. Accordingly, the first image captured by the first capture device 111 includes relatively more scenario contents and substantially fully covers a region to be monitored; whereas, for the second image captured by the second capture device 112, objects correspond to relatively large imaging region and objects (e.g., a license plate, a vehicle body, a driver behavior) relatively far away from the second capture device 112 correspond to relatively high sharpness (or resolution).

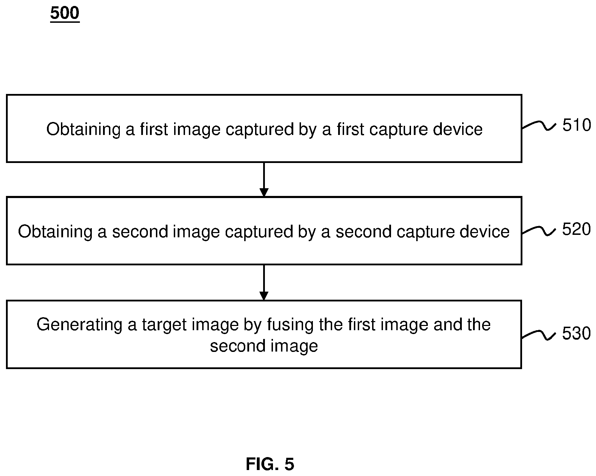

In an embodiment, the first image corresponds to a first monitoring region that corresponds to the first FOV and the second image corresponds to a second monitoring region that corresponds to the second FOV. In some embodiments, as described above, since the first FOV and the second FOV may be partially overlapped with each other, the first monitoring region and the second monitoring region may be partially overlapped with each other. In some embodiments, the first monitoring region may cover at least a portion of the second monitoring region. For example, the second monitoring region may be totally within the first monitoring region. As another example, a portion of the second monitoring region may be within the first monitoring region. More descriptions regarding the first image and the second image may be found elsewhere in the present disclosure (e.g., FIG. 5 and the description thereof).

In some embodiments, the first capture device 111 and/or the second capture device 112 may transmit captured images to one or more components (e.g., the server 120, the user device 140, or the storage device 150, or the like, or any combination thereof) of the image processing system 100.

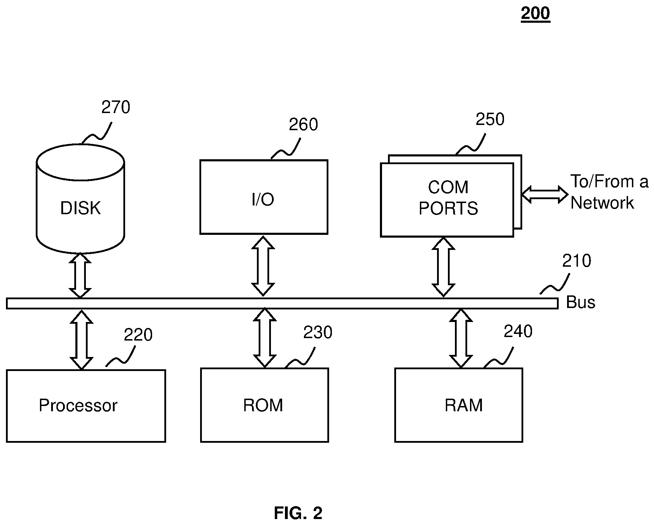

The server 120 may be a single server or a server group. The server group may be centralized or distributed (e.g., the server 120 may be a distributed system). In some embodiments, the server 120 may be local or remote. For example, the server 120 may access information and/or data stored in the capture devices 110, the user device 140, and/or the storage device 150 via the network 130. As another example, the server 120 may be directly connected to the capture devices 110, the user device 140, and/or the storage device 150 to access stored information and/or data. In some embodiments, the server 120 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, the server 120 may be implemented on a computing device 200 including one or more components illustrated in FIG. 2 of the present disclosure.

In some embodiments, the server 120 may include a processing device 121. The processing device 121 may process information and/or data relating to image processing to perform one or more functions described in the present disclosure. For example, the processing device 121 may obtain the first image captured by the first capture device 111 and the second image captured by the second capture device 112. The processing device 121 may generate a target image by fusing the first image and the second image. Further, the processing device 121 may transmit the target image to the user device 140 for display and/or further processing. In some embodiments, the processing device 121 may include one or more processing devices (e.g., single-core processing device(s) or multi-core processor(s)). Merely by way of example, the processing device 121 may include a central processing unit (CPU), an application-specific integrated circuit (ASIC), an application-specific instruction-set processor (ASIP), a graphics processing unit (GPU), a physics processing unit (PPU), a digital signal processor (DSP), a field programmable gate array (FPGA), a programmable logic device (PLD), a controller, a microcontroller unit, a reduced instruction-set computer (RISC), a microprocessor, or the like, or any combination thereof.

In some embodiment, the sever 120 may be unnecessary and all or part of the functions of the server 120 may be implemented by other components (e.g., the at least two capture devices 110, the user device 140) of the image processing system 100. For example, the processing device 121 may be integrated into the first capture device 111, the second capture device 112, or the user device 140 and the functions (e.g., generating the target image) of the processing device 121 may be implemented by the first capture device 111, the second capture device 112, or the user device 140.

The network 130 may facilitate exchange of information and/or data for the image processing system 100. In some embodiments, one or more components (e.g., the server 120, the capture devices 110, the user device 140, the storage device 150) of the image processing system 100 may transmit information and/or data to other component(s) of the image processing system 100 via the network 130. For example, the server 120 may obtain the first image from the first capture device 111 and the second image from the second capture device 112 via the network 130. As another example, the server 120 may transmit the target image to the user device 140 via the network 130. In some embodiments, the network 130 may be any type of wired or wireless network, or combination thereof. Merely by way of example, the network 130 may include a cable network (e.g., a coaxial cable network), a wireline network, an optical fiber network, a telecommunications network, an intranet, an Internet, a local area network (LAN), a wide area network (WAN), a wireless local area network (WLAN), a metropolitan area network (MAN), a public telephone switched network (PSTN), a Bluetooth network, a ZigBee network, a near field communication (NFC) network, or the like, or any combination thereof.

The user device 140 may be configured to receive information and/or data from the capture devices 110, the server 120, and/or the storage device 150 via the network 130. For example, the user device 140 may receive the target image from the server 120. In some embodiments, the user device 140 may process information and/or data received from the capture devices 110, the server 120, and/or the storage device 150 via the network 130. For example, the user device 140 may display the target image received from the server 120. In some embodiments, the user device 140 may provide a user interface via which a user may view information and/or input data and/or instructions to the image processing system 100. For example, the user may view the target image via the user interface. As another example, the user may input an instruction associated with an image processing parameter via the user interface. In some embodiments, the user device 140 may include a mobile phone 140-1, a computer 140-2, a wearable device 140-3, or the like, or any combination thereof. In some embodiments, the user device 140 may include a display that can display information in a human-readable form, such as text, image, audio, video, graph, animation, or the like, or any combination thereof. The display of the user device 140 may include a cathode ray tube (CRT) display, a liquid crystal display (LCD), a light emitting diode (LED) display, a plasma display panel (PDP), a three dimensional (3D) display, or the like, or a combination thereof. In some embodiments, the user device 140 may be connected to one or more components (e.g., the capture devices 110, the server 120, the storage device 150) of the image processing system 100 via the network 130.

The storage device 150 may be configured to store data and/or instructions. The data and/or instructions may be obtained from, for example, the capture devices 110, the server 120, the user device 140, and/or any other component of the image processing system 100. In some embodiments, the storage device 150 may store data and/or instructions that the server 120 may execute or use to perform exemplary methods described in the present disclosure. For example, the storage device 150 may store one or more parameters associated with the image processing. In some embodiments, the storage device 150 may include a mass storage, a removable storage, a volatile read-and-write memory, a read-only memory (ROM), or the like, or any combination thereof. Exemplary mass storage may include a magnetic disk, an optical disk, a solid-state drive, etc. Exemplary removable storage may include a flash drive, a floppy disk, an optical disk, a memory card, a zip disk, a magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (EPROM), an electrically erasable programmable ROM (EEPROM), a compact disk ROM (CD-ROM), and a digital versatile disk ROM, etc. In some embodiments, the storage device 150 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the storage device 150 may be connected to the network 130 to communicate with one or more components (e.g., the capture devices 110, the server 120, the user device 140) of the image processing system 100. One or more components of the image processing system 100 may access the data or instructions stored in the storage device 150 via the network 130. In some embodiments, the storage device 150 may be directly connected to or communicate with one or more components (e.g., the capture devices 110, the server 120, the user device 140) of the image processing system 100. In some embodiments, the storage device 150 may be part of other components of the image processing system 100, such as the capture devices 110, the server 120, or the user device 140.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. In some embodiments, one or more components of the image processing system 100 may be integrated into one component or be omitted. In some embodiments, one or more additional components may be added in the image processing system 100. Such variations are within the scope of the present disclosure.

FIG. 2 is a schematic diagram illustrating exemplary hardware and/or software components of an exemplary computing device according to some embodiments of the present disclosure. In some embodiments, the server 120 may be implemented on the computing device 200. For example, the processing device 121 may be implemented on the computing device 200 and configured to perform functions of the processing device 121 disclosed in this disclosure.

The computing device 200 may be used to implement any component of the image processing system 100 as described herein. For example, the processing device 121 may be implemented on the computing device 200, via its hardware, software program, firmware, or a combination thereof. Although only one such computer is shown, for convenience, the computer functions relating to image processing as described herein may be implemented in a distributed fashion on a number of similar platforms to distribute the processing load.

The computing device 200, for example, may include COM ports 250 connected to and from a network connected thereto to facilitate data communications. The computing device 200 may also include a processor (e.g., a processor 220), in the form of one or more processors (e.g., logic circuits), for executing program instructions. For example, the processor 220 may include interface circuits and processing circuits therein. The interface circuits may be configured to receive electronic signals from a bus 210, wherein the electronic signals encode structured data and/or instructions for the processing circuits to process. The processing circuits may conduct logic calculations, and then determine a conclusion, a result, and/or an instruction encoded as electronic signals. Then the interface circuits may send out the electronic signals from the processing circuits via the bus 210.

The computing device 200 may further include program storage and data storage of different forms including, for example, a disk 270, a read-only memory (ROM) 230, or a random-access memory (RAM) 240, for storing various data files to be processed and/or transmitted by the computing device 200. The computing device 200 may also include program instructions stored in the ROM 230, RAM 240, and/or another type of non-transitory storage medium to be executed by the processor 220. The methods and/or processes of the present disclosure may be implemented as the program instructions. The computing device 200 may also include an I/O component 260, supporting input/output between the computing device 200 and other components. The computing device 200 may also receive programming and data via network communications.

Merely for illustration, only one processor is illustrated in FIG. 2. Multiple processors 220 are also contemplated; thus, operations and/or method steps performed by one processor 220 as described in the present disclosure may also be jointly or separately performed by the multiple processors. For example, if in the present disclosure the processor 220 of the computing device 200 executes both step A and step B, it should be understood that step A and step B may also be performed by two different processors 220 jointly or separately in the computing device 200 (e.g., a first processor executes step A and a second processor executes step B, or the first and second processors jointly execute steps A and B).

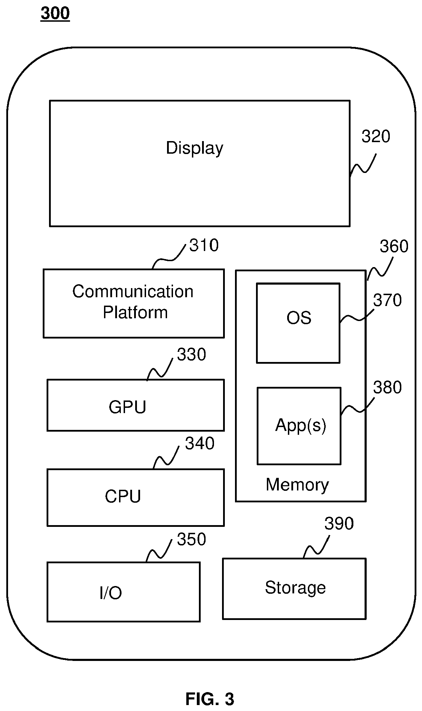

FIG. 3 is a schematic diagram illustrating exemplary hardware and/or software components of an exemplary terminal device according to some embodiments of the present disclosure. In some embodiments, the user device 140 may be implemented on the terminal device 300 shown in FIG. 3.

As illustrated in FIG. 3, the terminal device 300 may include a communication platform 310, a display 320, a graphic processing unit (GPU) 330, a central processing unit (CPU) 340, an I/O 350, a memory 360, and a storage 390. In some embodiments, any other suitable component, including but not limited to a system bus or a controller (not shown), may also be included in the terminal device 300.

In some embodiments, an operating system 370 (e.g., iOS™, Android™, Windows Phone™) and one or more applications (Apps) 380 may be loaded into the memory 360 from the storage 390 in order to be executed by the CPU 340. The applications 380 may include a browser or any other suitable mobile apps for receiving and rendering information relating to image processing or other information from the processing device 121. User interactions may be achieved via the I/O 350 and provided to the processing device 121 and/or other components of the image processing system 100 via the network 130.

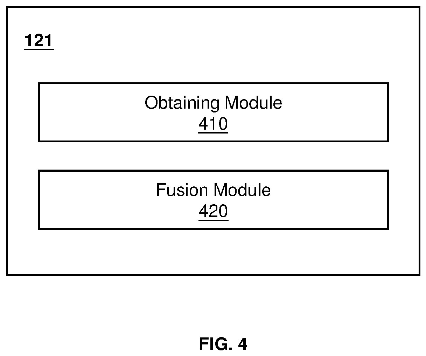

FIG. 4 is a block diagram illustrating an exemplary processing device according to some embodiments of the present disclosure. As shown in FIG. 4, the processing device 121 may include an obtaining module 410 and a fusion module 420.

The obtaining module 410 may be configured to obtain information/data from one or more components of the image processing system 100. For example, the obtaining module 410 may obtain a first image captured by the first capture device from the first capture device 111 or a storage device (e.g., the storage device 150, the ROM 230, the RAM 240, and/or the storage 390) of the image processing system 100. As another example, the obtaining module 410 may obtain a second image captured by the second capture device 112 from the second capture device 112 or a storage device (e.g., the storage device 150, the ROM 230, the RAM 240, and/or the storage 390) of the image processing system 100. The second image and the first image may be captured at the same time point. The second image may include an overlapping region with the first image. In some embodiments, the obtaining module 410 may obtain the first image and the second image from the same storage device (e.g., the storage device 150). In some embodiments, the obtaining module 410 may obtain the first image in response to a determination that the first capture device 111 captures the first image. For example, if the first capture device 111 captures the first image continuously, the obtaining module 410 may obtain the first image continuously. As another example, if the first capture device 111 captures the first image intermittently, the obtaining module 410 may obtain the first image intermittently. Similarly, the obtaining module 410 may obtain the second image in response to a determination that the second capture device 112 captures the second image. In some embodiments, the obtaining module 410 may obtain the first image and/or the second image every preset time interval (e.g., every 30 seconds, every 5 minutes, every 1 hour, etc.). In some embodiments, the obtaining module 410 may obtain the first image in response to receiving an obtaining request. For example, the obtaining request may include first information relating to the first image, e.g., a first time point when the first image is captured and/or a first location where the first image is captured. The obtaining module 410 may retrieve and obtain the first image according to the first information. Similarly, the obtaining module 410 may obtain the second image in response to receiving an obtaining request. For example, the obtaining request may include second information relating to the second image, e.g., a second time point when the second image is captured and/or a second location where the second image is captured. The obtaining module 410 may retrieve and obtain the second image according to the second information. More descriptions regarding obtaining the first image and the second image may be found elsewhere in the present disclosure (e.g., operations 510 and 520 in FIG. 5 and the descriptions thereof).

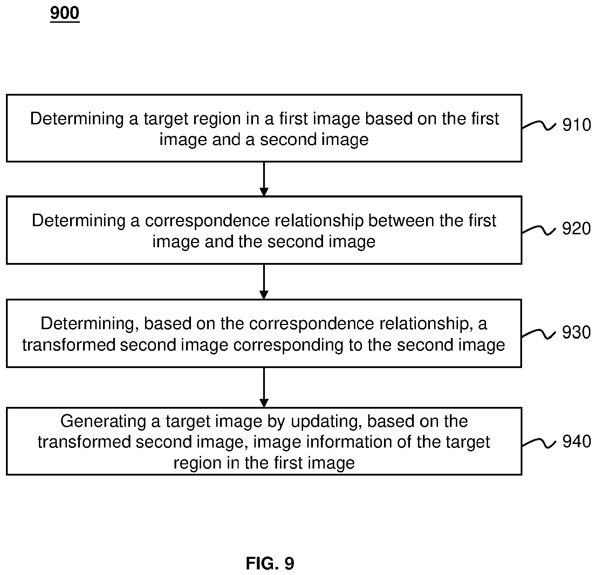

The fusion module 420 may be configured to generate a target image by fusing the first image and the second image. For example, the fusion module 420 may determine a target region in the first image based on the first image and the second image. The fusion module 420 may determine a correspondence relationship between the first image and the second image. The fusion module 420 may generate the target image by updating image information of the target region in the first image, based on the correspondence relationship and the second image. As another example, the fusion module 420 may adjust a size of the first image and/or a size of the second image. The processing device 121 may generate the target image by fusing the adjusted first image and the adjusted second image. More descriptions regarding generating the target image may be found elsewhere in the present disclosure (e.g., operation 530 in FIG. 5, FIG. 9 and the descriptions thereof).

The modules in the processing device 121 may be connected to or communicated with each other via a wired connection or a wireless connection. The wired connection may include a metal cable, an optical cable, a hybrid cable, or the like, or any combination thereof. The wireless connection may include a Local Area Network (LAN), a Wide Area Network (WAN), a Bluetooth, a ZigBee, a Near Field Communication (NFC), or the like, or any combination thereof. Two or more of the modules may be combined into a single module, and any one of the modules may be divided into two or more units. For example, the obtaining module 410 may include a unit for obtaining the first image and a unit for obtaining the second image. As another example, the fusion module 420 may be divided into a plurality of units each of which may implement a portion of functions of the fusion module 420. In some embodiments, the processing device 121 may include one or more additional modules. For example, the processing device 121 may include a communication module to transmit the target image to one or more components (e.g., the user device 140) of the image processing system 100. As another example, the processing device 121 may include a storage module (not shown) for storing information and/or data (e.g., the target image) generated by the processing device 121.

FIG. 5 is a flowchart illustrating an exemplary process for image processing according to some embodiments of the present disclosure. In some embodiments, one or more operations in the process 500 may be implemented in the image processing system 100 illustrated in FIG. 1. For example, one or more operations in the process 500 may be stored in a storage device (e.g., the storage device 150, the ROM 230, the RAM 240, and/or the storage 390) as a form of instructions, and invoked and/or executed by a processing device 121 (e.g., the processor 220, the CPU 340, and/or one or more modules illustrated FIG. 4) The operations of the illustrated process presented below are intended to be illustrative. In some embodiments, the process may be accomplished with one or more additional operations not described, and/or without one or more of the operations discussed. Additionally, the order in which the operations of the process as illustrated in FIG. 5 and described below is not intended to be limiting. The process 500 may be described in connection with FIG. 1 and the description thereof.

In 510, the processing device 121 (e.g., the obtaining module 410) may obtain a first image captured by a first capture device (e.g., the first capture device 111).

In some embodiments, the first capture device 111 may capture the first image. The first capture device 111 may transmit the first image to a storage device (e.g., the storage device 150, the ROM 230, the RAM 240, and/or the storage 390) for storing. The processing device 121 may obtain or retrieve the first image from the storage device (e.g., the network 130). In some embodiments, the processing device 121 may directly obtain the first image from the first capture device 111 (e.g., via the network 130).

In some embodiments, the processing device 121 may obtain the first image in response to a determination that the first capture device 111 captures the first image. For example, if the first capture device 111 captures the first image continuously, the processing device 121 may obtain the first image continuously. As another example, if the first capture device 111 captures the first image intermittently, the processing device 121 may obtain the first image intermittently. In some embodiments, the processing device 121 may obtain the first image every preset time interval (e.g., every 30 seconds, every 5 minutes, every 1 hour, etc.). In some embodiments, the processing device 121 may obtain the first image in response to receiving an obtaining request. For example, the obtaining request may include first information relating to the first image, e.g., a first time point when the first image is captured and/or a first location where the first image is captured. The processing device 121 may retrieve and obtain the first image according to the first information.

In 520, the processing device 121 (e.g., the obtaining module 410) may obtain a second image captured by a second capture device (e.g., the second capture device 112). The second image may be captured at a time point the same as a time point at which the first image is captured.

In some embodiments, the second capture device 112 may capture the second image. The second capture device 112 may transmit the second image to a storage device (e.g., the storage device 150, the ROM 230, the RAM 240, and/or the storage 390). The processing device 121 may obtain or retrieve the second image from the storage device (e.g., the network 130). In some embodiments, the processing device 121 may directly obtain the second image from the second capture device 112 (e.g., via the network 130).

In some embodiments, the processing device 121 may obtain the second image in response to a determination that the second capture device 112 captures the second image. For example, if the second capture device 112 captures the second image continuously, the processing device 121 may obtain the second image continuously. As another example, if the second capture device 112 captures the second image intermittently, the processing device 121 may obtain the second image intermittently. In some embodiments, the processing device 121 may obtain the second image every preset time interval (e.g., every 30 seconds, every 5 minutes, every 1 hour, etc.). In some embodiments, the processing device 121 may obtain the second image in response to receiving an obtaining request. For example, the obtaining request may include second information relating to the second image, e.g., a second time point when the second image is captured and/or a second location where the second image is captured. The processing device 121 may retrieve and obtain the second image according to the second information.

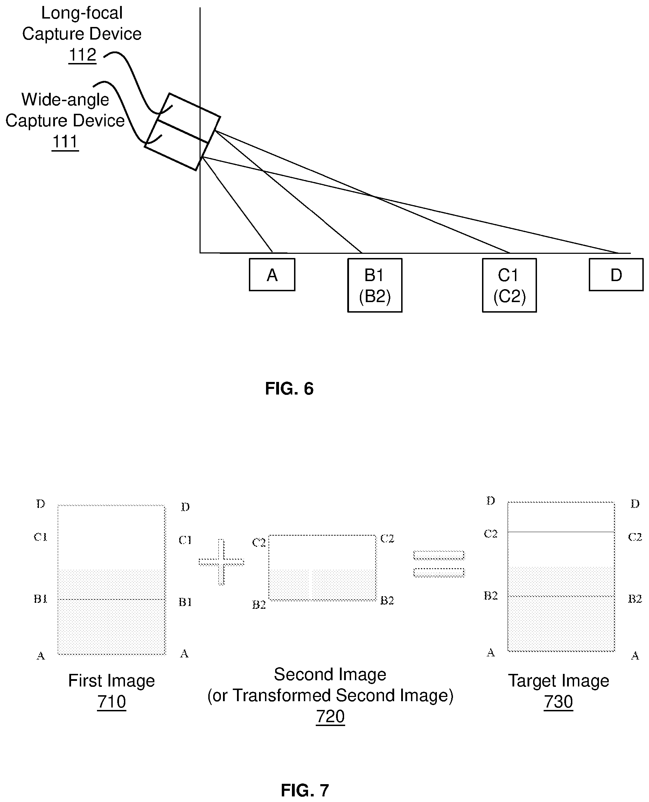

As described in FIG. 1, the second focal length of the second capture device 112 may be larger than the first focal length of the first capture device 111. The second FOV of the second capture device 112 may be less than the first FOV of the first capture device 111. The angle between the first optical axis of the first capture device 111 and the second optical axis of the second capture device 112 may be within a range of 0° to 15°. The first FOV (e.g., a region from A to D illustrated in FIG. 6) may cover at least a portion of the second FOV (e.g., a region from B2 to C2 illustrated in FIG. 6). Accordingly, the first image and the second image may include an overlapping region (e.g., a region B1C1C1B1 or a region B2C2C2B2 illustrated in FIG. 7). Since the second focal length is larger than the first focal length, objects (e.g., a vehicle, a license plate, a driver behavior) in the overlapping region in the second image may be sharper and larger than that in the overlapping region in the first image.

In 530, the processing device 121 (e.g., the fusion module 420) may generate a target image (also referred to as a "fused image") by fusing the first image and the second image.

In some embodiments, the processing device 121 may determine a target region in the first image based on the first image and the second image. The target region in the first image may include at least a portion of the overlapping region between the first image and the second image. The processing device 121 may generate the target image by updating image information of the target region in the first image based on the second image. In some embodiments, the image information of the target image may include brightness, color, details, resolution, contrast, or the like, or any combination thereof. In some embodiments, the processing device 121 may determine a correspondence relationship (e.g., a coordinate correspondence relationship) between the first image and the second image. The processing device 121 may determine a transformed second image corresponding to the second image based on the correspondence relationship. Further, the processing device 121 may generate the target image by updating the image information of the target region in the first image based on the transformed second image.

In some embodiments, as described elsewhere in the present disclosure, since the first FOV is larger than the second FOV (accordingly, the first monitoring region in the first image is larger than the second monitoring region in the second image), and in general a size (e.g., a length, a width) of the first image is the same as that of the second image, in order to use the second image to update the image information of the target region in the first image, the processing device 121 may adjust a size of the first image and/or a size of the second image. For example, the processing device 121 may enlarge the first image and/or shrink the second image to make that a size of a specific object in the adjusted first image is substantially the same as that of a corresponding object in the adjusted second image. Accordingly, the processing device 121 may determine a correspondence relationship between the adjusted first image and the adjusted second image. The processing device 121 may update the target region in the adjusted first image based on the correspondence relationship and the adjusted second image. More descriptions regarding the target region and generating the target image may be found elsewhere in the present disclosure (e.g., FIG. 9 and the description thereof).

It should be noted that the above description regarding the process 500 is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. In some embodiments, one or more additional operations may be added in the process 500 and/or one or more operations of the process 500 described above may be omitted. For example, an additional operation for determining whether a vehicle in the first image is associated with traffic violations may be added before operation 520. In response to determining that the vehicle in the first image is associated with traffic violations, the processing device 121 may proceed to operation 520 to obtain the second image. In response to determining that the vehicle is not associated with traffic violations, the processing device 121 may repeat operation 510 until a vehicle associated with traffic violations is identified in the first image. As another example, an additional operation for transmitting the target image to the user device 140 may be added after operation 530. As a further example, operations 510 and 520 may be combined as a single operation in which the processing device 121 may both obtain the first image and the second image.

FIG. 6 is a schematic diagram illustrating exemplary FOVs of a first capture device and a second capture device according to some embodiments of the present disclosure. As shown in FIG. 6, the first capture device 111 (which is a wide-angle capture device) and the second capture device 112 (which is a long-focal capture device) may be arranged in vertical and integrated into a binocular capture device. The binocular capture device may be mounted and inclined slightly downward at a certain height above the ground. The first FOV of the first capture device 111 can be denoted as a region from A to D; the second FOV of the second capture device 112 can be denoted as a region from B2 to C2. It can be seen that the second FOV is within the first FOV and partially overlaps with the first FOV with an overlapping region denoted as a range from B1 to C1 (or a range from B2 to C2).

FIG. 7 is a schematic diagram illustrating an exemplary process for determining a target image according to some embodiments of the present disclosure. As shown in FIG. 7, a first image 710 is captured by the first capture device 111 and a second image (or a transformed second image) 720 is captured by the second capture device 112. It can be seen that the first image 710 corresponds a first monitoring region (denoted as ADDA) which corresponds to the first FOV (i.e., the region from A to D) and the second image 720 corresponds to a second monitoring region (denoted as B2C2C2B2) which corresponds to the second FOV (i.e., the region from B2 to C2). As described in connection with operation 530, the processing device 121 may determine a target region (denoted as B1C1C1B1, which overlaps with the second monitoring region B2C2C2B2) in the first image 710 and updated image information of the target region based on the second image (or the transformed second image) 720.

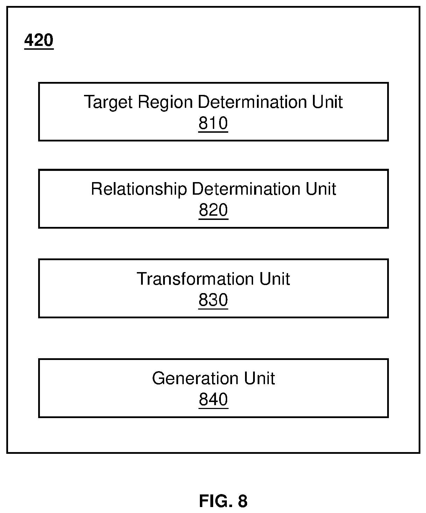

FIG. 8 is a block diagram illustrating an exemplary fusion module according to some embodiments of the present disclosure. As shown in FIG. 8, the fusion module 420 may include a target region determination unit 810, a relationship determination unit 820, a transformation unit 830, and a generation unit 840.

The target region determination unit 810 may be configured to determine a target region in the first image based on the first image and the second image. In some embodiments, the target region determination unit 810 may determine the overlapping region between the first image and the second image. The target determination unit 810 may determine the target region in the first image based on the overlapping region. In some embodiments, the target region determination unit 810 may adjust a size of the first image and/or a size of the second image. The target region determination unit 810 may determine the target region in the adjusted first image based on the adjusted first image and the adjusted second image. More descriptions regarding determining the target region in the first image may be found elsewhere in the present disclosure (e.g., operation 910 in FIG. 9 and the description thereof).

The relationship determination unit 820 may be configured to determine a correspondence relationship between the first image and the second image. In some embodiments, the correspondence relationship may be predetermined. The relationship determination unit 820 may obtain the correspondence relationship from the first capture device 111, the second capture device 112, or any storage device (e.g., the storage device 150) disclosed elsewhere in the present disclosure. In some embodiments, the relationship determination unit 820 may determine the correspondence relationship based on the first monitoring region of the first capture device 111 and the second monitoring region of the second capture device 112. More descriptions regarding the determination of the correspondence relationship may be found elsewhere in the present disclosure (e.g., operation 920 in FIG. 9 and the description thereof).

The transformation unit 830 may be configured to determine a transformed second image corresponding to the second image based on the correspondence relationship. The transformed second image may be under a coordinate system the same as that of the first image.

The generation unit 840 may be configured to generate the target image based on the first image and the transformed second image. In some embodiments, the generation unit 840 may update first pixel values of the target region in the first image based on second pixel values corresponding to the target region in the transformed second image. For example, the generation unit 840 may determine the target image by directly replacing the first pixel values of the target region in the first image by the second pixel values. As another example, the generation unit 840 may determine the target image by weighting the first pixel values of the target region in the first image and the second pixel values corresponding to the target region in the transformed second image. More descriptions regarding the generation of the target image may be found elsewhere in the present disclosure (e.g., operation 940 in FIG. 9 and the description thereof).

The units in the fusion module 410 may be connected to or communicated with each other via a wired connection or a wireless connection. The wired connection may include a metal cable, an optical cable, a hybrid cable, or the like, or any combination thereof. The wireless connection may include a Local Area Network (LAN), a Wide Area Network (WAN), a Bluetooth, a ZigBee, a Near Field Communication (NFC), or the like, or any combination thereof. Two or more of the units may be combined into a single module, and any one of the units may be divided into two or more sub-units. For example, the target region determination unit 810 and the relationship determination unit 820 may be integrated into a single module. In some embodiments, the fusion module 420 may include one or more additional units. For example, an adjustment unit used for adjusting the size of the first image and/or the size of the second image may be added in the fusion module 420. As another example, a storage unit used for storing information and/or data associated with the fusion module 420 may be added in the fusion module 420.

FIG. 9 is a flowchart illustrating an exemplary process for generating a target image according to some embodiments of the present disclosure. In some embodiments, one or more operations in the process 900 may be implemented in the image processing system 100 illustrated in FIG. 1. For example, one or more operations in the process 900 may be stored in a storage device (e.g., the storage device 150, the ROM 230, the RAM 240, and/or the storage 390) as a form of instructions, and invoked and/or executed by a processing device 121 (e.g., the processor 220, the CPU 340, and/or one or more modules illustrated FIG. 4). The operations of the illustrated process presented below are intended to be illustrative. In some embodiments, the process may be accomplished with one or more additional operations not described, and/or without one or more of the operations discussed. Additionally, the order in which the operations of the process as illustrated in FIG. 6 and described below is not intended to be limiting. In some embodiments, operation 530 in FIG. 5 may be performed based on one or more operations of the process 900.

In 910, the processing device 121 (e.g., the target region determination unit 810) may determine a target region in the first image based on the first image and the second image.

As described elsewhere in the present disclosure, the target region may be a region including at least part of an overlapping region between the first monitoring region and the second monitoring region. For example, the processing device 121 may directly designate the overlapping region as the target region. As another example, take traffic monitoring as an example, since some background objects (e.g., trees, buildings) are not targets of interest in traffic monitoring, the processing device 121 may determine a sub-region of the overlapping region, which includes target objects such as vehicles (e.g., vehicle bodies, license plates), drivers (e.g., driver behaviors), lane lines, etc. as the target region. In an embodiment, the processing device 121 identifies lane lines in the overlapping region and determines a region between two farthest lane lines in the overlapping region as the target region.

In an embodiment, the processing device 121 determines the overlapping region between the first image and the second image by matching feature points in the first image with feature points in the second image using a feature matching algorithm. Exemplary feature matching algorithm may include a Harris algorithm a scale invariant feature transform (SIFT) algorithm, a features from accelerated segment test (FAST) algorithm, a speeded-up robust features (SURF) algorithm, etc.

In some embodiments, as described in connection with operation 530, the processing device 121 may adjust the size of the first image and/or the size of the second image according to a predetermined zoom level, for example, enlarge the first image and/or shrink the second image, to make that a size of a specific object in the adjusted first image is substantially the same as that of a corresponding object in the adjusted second image. The predetermined zoom level may be a default setting of the image processing system 100 or may be adjustable under different situations. Merely by way of example, it is assumed that the second monitoring region is totally within the first monitoring region, the processing device 121 may determine a box in the first image by matching a boundary of the second image with the first image. Then the processing device 121 may determine the predetermined zoom level based on a size of the boundary of the second image and a size of the box in the first image. For example, the processing device 121 may determine the predetermined zoom level by dividing the size of the boundary of the second image by the size of the box in the first image. Further, the processing device 121 may determine the target region in the adjusted first image based on the adjusted first image and the adjusted second image.

In 920, the processing device 121 (e.g., the relationship determination unit 820) may determine a correspondence relationship between the first image and the second image. As used herein, the correspondence relationship between the first image and the second image may refer to a correspondence relationship between coordinates of pixels of the second image and coordinates of corresponding pixels in the first image. For example, the correspondence relationship between the first image and the second image may be represented by a transformation matrix, according to which the first image and the second image can be transformed into respective images under a same coordinate system.

In some embodiments, since the arrangement of the first capture device 111 and the second capture device 112 is predefined, the correspondence relationship between the first image captured by the first capture device 111 and the second image captured by the second capture device 112 is predetermined. The processing device 121 may obtain the predetermined correspondence relationship from the first capture device 111, the second capture device 112, or any storage device (e.g., the storage device 150) disclosed elsewhere in the present disclosure.

In some embodiments, the processing device 121 may determine the correspondence relationship based on the first monitoring region of the first capture device 111 and the second monitoring region of the second capture device 112. Merely by way of example, it is assumed that the second monitoring region is totally within the first monitoring region, the processing device 121 may determine the correspondence relationship based on first coordinates of pixels on the box (which corresponds to the boundary of the second image) in the first image and second coordinates of pixels on the boundary of the second image.

In 930, the processing device 121 (e.g., the transformation unit 830) may determine, based on the correspondence relationship, a transformed second image corresponding to the second image. As described above, the transformed second image is under a coordinate system the same as that of the first image.

In 940, the processing device 121 (e.g., the generation unit 840) may generate the target image by updating, based on the transformed second image, image information of the target region in the first image.

In some embodiments, the processing device 121 may update first pixel values of the target region in the first image based on second pixel values corresponding to the target region in the transformed second image. For example, the processing device 121 may determine the target image by directly replacing the first pixel values of the target region in the first image by the second pixel values. As another example, the processing device 121 may determine the target image by weighting the first pixel values of the target region in the first image and the second pixel values corresponding to the target region in the transformed second image.

In an embodiment, the processing device 121 determines a first weight relating to brightness of the transformed second image. The processing device 121 determines a second weight relating to color of the transformed second image. The processing device 121 determines a third weight relating to high-frequency components of the transformed second image. Further, the processing device 121 generates the target image by updating the image information of the target region in the first image based at least on the first weight, the second weight, the third weight, and the transformed second image.

For example, the processing device 121 may determine the target brightness of the target region in the target image according to a formula (1) below:

$$B_{Ti} = B_{1i} * (1 - w_{1i}) + B_{2i} * w_{1i} \qquad (1)$$

where $B_{Ti}$ refers to a target brightness value of a pixel $i$ in the target region in the target image, $B_{1i}$ refers to a first brightness value of a pixel corresponding to the pixel $i$ in the first image, $B_{2i}$ refers to a second brightness value of a pixel corresponding to the pixel $i$ in the transformed second image, and $w_{1i}$ refers to a first weight corresponding to the pixel $i$.

In some embodiments, the first weight may be a default setting of the image processing system 100 or may be adjustable under different situations. For example, the processing device 121 may determine the first weight based on at least a portion of brightness values of pixels in the target region in the first image and corresponding brightness values of pixels in the transformed second image, which can ensure a relatively smooth brightness in the target image. For example, in order to reduce or avoid a sudden brightness change in the vicinity of a boundary of the target region, first weights corresponding to pixels in the vicinity of the boundary of the target region may be different from (e.g., less than) that of pixels within the target region.

As another example, the processing device 121 may determine the target color of the target region in the target image according to formula (2) below:

$$C_{Tj}=C_{1j}*(1-w_{2j})+C_{2j}*w_{2j} \qquad (2)$$

where $C_{Tj}$ refers to a target color value of a pixel $j$ in the target region in the target image, $C_{1j}$ refers to a first color value of a pixel corresponding to the pixel $j$ in the first image, $C_{2j}$ refers to a second color value of a pixel corresponding to the pixel $j$ in the transformed second image, and $w_{2j}$ refers to a second weight corresponding to the pixel $j$.

In some embodiments, the second weight may be a default setting of the image processing system 100 or may be adjustable under different situations. For example, the processing device 121 may determine the second weight based on at least a portion of color values of pixels (e.g., color values of pixels in a maximum inscribed circle) in the target region in the first image and corresponding color values of pixels in the transformed second image, which can ensure a uniform color hue in the target image.

In an embodiment, the processing device 121 determines target high-frequency components of the target region in the target image according to formula (3) below:

$$H_{Tk}=H_{1k}*(1-w_{3k})+H_{2k}*w_{3k} \qquad (3)$$

where $H_{Tk}$ refers to a target amplitude value of a high-frequency component $k$ in the target region in the target image, $H_{1k}$ refers to a first amplitude value of a high-frequency component corresponding to the high-frequency component k in the first image, $H_{2k}$ refers to a second amplitude value of a high-frequency component corresponding to the high-frequency component k in the transformed second image, and $w_{3k}$ refers to a third weight corresponding to the high-frequency component $k$.

In some embodiments, the third weight may be a default setting of the image processing system 100 or may be adjustable under different situations. For example, the processing device 121 may determine the third weight based on at least a portion of high-frequency components of the target region in the first image and corresponding high-frequency components in the transformed second image, which can ensure relatively clear details in the target image. After determining the target high-frequency components of the target region, the processing device 121 may further determine the total components of the target region in the target image by combining the target high-frequency components and low-frequency components of the target region in the first image.

In some embodiments, the first weight, the second weight, and/or the third weight may be pre-determined and stored in a storage device (e.g., the storage device 150, the ROM 230, the RAM 240, and/or the storage 390) of the image processing system 100. The processing device 121 may directly obtain the first weight, the second weight, and/or the third weight from the storage device.

It should be noted that the above description regarding the process 900 is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. In some embodiments, one or more additional operations may be added in the process 900 and/or one or more operations of the process 900 described above may be omitted. For example, operation 930 may be omitted. As another example, an operation for enlarging the first image and/or shrinking the second image may be added before operation 910. As a further example, operations 910 and 920 may be combined as a single operation in which the processing device 121 may both determine the target region and obtain the correspondence relationship.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by the present disclosure, and are within the spirit and scope of the exemplary embodiments of the present disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment," "one embodiment," or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "block," "module," "engine," "unit," "component," or "system." Furthermore, aspects of the present disclosure may take the form of a computer program product embodied in one or more computer-readable media having computer-readable program code embodied thereon.

A computer-readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer-readable signal medium may be any computer-readable medium that is not a computer-readable storage medium and that may communicate, propagate, or transport a program for use by or in connection with an instruction execution system, apparatus, or device. Program code embodied on a computer-readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object-oriented programming language such as Java, Scala, Smalltalk, Eiffel, JADE, Emerald, C++, C#, VB. NET, Python or the like, conventional procedural programming languages, such as the "C" programming language, Visual Basic, Fortran 1703, Perl, COBOL 1702, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a software as a service (SaaS).

Furthermore, the recited order of processing elements or sequences, or the use of numbers, letters, or other designations therefore, is not intended to limit the claimed processes and methods to any order except as may be specified in the claims. For example, although the implementation of various components described above may be embodied in a hardware device, it may also be implemented as a software-only solution-e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

**Claims**

1. A system, comprising:

   a first capture device with a first focal length and a first field of view (FOV);
   a second capture device with a second focal length and a second FOV, wherein the second focal length is larger than the first focal length and the second FOV is less than the first FOV;
   an obtaining module configured to

      obtain a first image captured by the first capture device, the first image corresponding to a first monitoring region that corresponds to the first FOV; and
obtain a second image captured by the second capture device, wherein the first image and the second image correspond to a same time point, and the second image corresponds to a second monitoring region that corresponds to the second FOV; and

a fusion module configured to generate a target image by fusing the first image and the second image, wherein to generate a target image by fusing the first image and the second image, the fusion module is further configured to:

determine an overlapping region between the first image and the second image by matching feature points in the first image with feature points in the second image using a feature matching algorithm;
identify lane lines in an overlapping region between the first monitoring region and the second monitoring region;
determine a region between two farthest lane lines in the overlapping region as a target region; and
generate the target image by updating, based on the second image, image information of the target region in the first image, including:

determining a correspondence relationship between the first image and the second image; the correspondence relationship between the first image and the second image referring to a correspondence relationship between coordinates of pixels of the second image and coordinates of corresponding pixels in the first image;
determining, based on the correspondence relationship, a transformed second image corresponding to the second image;
determining a first weight relating to brightness for determining brightness values of pixels in the target image based on pixels in the target region in the first image and corresponding pixels of the transformed second image;
determining a second weight relating to color for determining color values of pixels in the target image based on pixels in the target region in the first image and corresponding pixels of the transformed second image;
determining a third weight relating to high-frequency component for determining high-frequency component in the target image based on high-frequency components in the target region in the first image and high-frequency components of the transformed second image;
the target high-frequency component of the target region in the target image is determined according to a formula below:

$$H_{Tk}=H_{1k}*(1-w_{3k})+H_{2k}*w_{3k}$$

where $H_{Tk}$ refers to a target amplitude value of a high-frequency component $k$ in the target region in the target image, $H_{1k}$ refers to a first amplitude value of a high-frequency component corresponding to the high-frequency component $k$ in the first image, $H_{2k}$ refers to a second amplitude value of a high-frequency component corresponding to the high-frequency component $k$ in the transformed second image, and $w_{3k}$ refers to the third weight corresponding to the high-frequency component $k$;
and
generating the target image by updating, based on the first weight, the second weight, the third weight, and on the transformed second image, the image information of the target region in the first image, wherein first pixel values of the target region in the first image are updated based on second pixel values corresponding to the target region in the transformed second image.

2. The system of claim 1, wherein an angle between a first optical axis of the first capture device and a second optical axis of the second capture device is within a range from 0° to 15°.

3. The system of claim 1 or claim 2, wherein the first FOV covers at least a portion of the second FOV.

4. The system of any one of claims 1-3, wherein to determine the target region, the fusion module is further configured to:

adjust a size of the first image or a size of the second image; and
determine the target region based on the adjusted first image or the adjusted second image.

**5.** The system of any one of claims 1-4, wherein the first capture device and the second capture device are arranged in vertical or horizontally.

**6.** A method implemented on a computing device including at least one storage device and at least one processor, the method comprising:

obtaining a first image captured by a first capture device, the first capture device being with a first focal length and a first field of view (FOV), and the first image corresponding to a first monitoring region that corresponds to the first FOV;

obtaining a second image captured by a second capture device, the second capture device being with a second focal length and a second FOV, wherein the second focal length is larger than the first focal length, the second FOV is less than the first FOV, the second image corresponds to a second monitoring region that corresponds to the second FOV, and the first image and the second image correspond to a same time point; and

generating a target image by fusing the first image and the second image, wherein the generating a target image by fusing the first image and the second image includes:

determining an overlapping region between the first image and the second image by matching feature points in the first image with feature points in the second image using a feature matching algorithm;

identifying lane lines in an overlapping region between the first monitoring region and the second monitoring region;

determining a region between two farthest lane lines in the overlapping region as a target region; and

generating the target image by updating, based on the second image, image information of the target region in the first image, including:

determining a correspondence relationship between the first image and the second image; the correspondence relationship between the first image and the second image referring to a correspondence relationship between coordinates of pixels of the second image and coordinates of corresponding pixels in the first image;

determining, based on the correspondence relationship, a transformed second image corresponding to the second image;

determining a first weight relating to brightness for determining brightness values of pixels in the target image based on pixels in the target region in the first image and corresponding pixels of the transformed second image;

determining a second weight relating to color for determining color values of pixels in the target image based on pixels in the target region in the first image and corresponding pixels of the transformed second image;

determining a third weight relating to high-frequency component for determining high-frequency component in the target image based on high-frequency components in the target region in the first image and high-frequency components of the transformed second image;

the target high-frequency component of the target region in the target image is determined according to a formula below:

$$H_{Tk}=H_{1k}*(1-w_{3k})+H_{2k}*w_{3k}$$

where $H_{Tk}$ refers to a target amplitude value of a high-frequency component $k$ in the target region in the target image, $H_{1k}$ refers to a first amplitude value of a high-frequency component corresponding to the high-frequency component $k$ in the first image, $H_{2k}$ refers to a second amplitude value of a high-frequency component corresponding to the high-frequency component $k$ in the transformed second image, and $w_{3k}$ refers to the third weight corresponding to the high-frequency component $k$; and

generating the target image by updating, based on the first weight, the second weight, the third weight, and on the transformed second image, the image information of the target region in the first image, wherein first pixel values of the target region in the first image are updated based on second pixel values corresponding to the target region in the transformed second image.

**7.** The method of claim 6, wherein an angle between a first optical axis of the first capture device and a second optical axis of the second capture device is within a range from 0° to 15°.

8. The method of claim 6 or 7, wherein the first FOV covers at least a portion of the second FOV.

9. The method of any of claims 6-8, wherein the determining the target region comprises:

adjusting a size of the first image or a size of the second image; and
determining the target region based on the adjusted first image or the adjusted second image.

10. The method of any one of claims 6-9, wherein the first capture device and the second capture device are arranged in vertical or horizontally.

11. A non-transitory computer readable medium, comprising executable instructions that, when executed by at least one processor, direct the at least one processor to perform a method, the method comprising:

obtaining a first image captured by a first capture device, the first capture device being with a first focal length and a first field of view (FOV), and the first image corresponding to a first monitoring region that corresponds to the first FOV;
obtaining a second image captured by a second capture device, the second capture device being with a second focal length and a second FOV, wherein the second focal length is larger than the first focal length, the second FOV is less than the first FOV, the second image corresponds to a second monitoring region that corresponds to the second FOV, and the first image and the second image correspond to a same time point; and
generating a target image by fusing the first image and the second image, wherein the generating a target image by fusing the first image and the second image includes:

determining an overlapping region between the first image and the second image by matching feature points in the first image with feature points in the second image using a feature matching algorithm;
identifying lane lines in an overlapping region between the first monitoring region and the second monitoring region;
determining a region between two farthest lane lines in the overlapping region as a target region; and
generating the target image by updating, based on the second image, image information of the target region in the first image, including

determining a correspondence relationship between the first image and the second image; the correspondence relationship between the first image and the second image referring to a correspondence relationship between coordinates of pixels of the second image and coordinates of corresponding pixels in the first image;
determining, based on the correspondence relationship, a transformed second image corresponding to the second image;
determining a first weight relating to brightness for determining brightness values of pixels in the target image based on pixels in the target region in the first image and corresponding pixels of the transformed second image;
determining a second weight relating to color for determining color values of pixels in the target image based on pixels in the target region in the first image and corresponding pixels of the transformed second image;
determining a third weight relating to high-frequency component for determining high-frequency component in the target image based on high-frequency components in the target region in the first image and high-frequency components of the transformed second image;
the target high-frequency component of the target region in the target image is determined according to a formula below:

$$H_{Tk}=H_{1k}*(1-w_{3k})+H_{2k}*w_{3k}$$

where $H_{Tk}$ refers to a target amplitude value of a high-frequency component $k$ in the target region in the target image, $H_{1k}$ refers to a first amplitude value of a high-frequency component corresponding to the high-frequency component $k$ in the first image, $H_{2k}$ refers to a second amplitude value of a high-frequency component corresponding to the high-frequency component $k$ in the transformed second image, and $w_{3k}$ refers to the third weight corresponding to the high-frequency component $k$;
and

generating the target image by updating, based on the first weight, the second weight, the third weight, and on the transformed second image, the image information of the target region in the first image, wherein first pixel values of the target region in the first image are updated based on second pixel values corresponding to the target region in the transformed second image.

**Patentansprüche**

1. System, umfassend:

eine erste Aufnahmevorrichtung mit einer ersten Brennweite und einem ersten Sichtfeld (FOV);
eine zweite Aufnahmevorrichtung mit einer zweiten Brennweite und einem zweiten FOV, wobei die zweite Brennweite größer ist als die erste Brennweite und das zweite FOV kleiner ist als das erste FOV;
ein Erfassungsmodul, das dafür konfiguriert ist,

ein erstes Bild zu erhalten, das von der ersten Aufnahmevorrichtung aufgenommen wurde, wobei das erste Bild einem ersten Überwachungsbereich entspricht, der dem ersten Sichtfeld entspricht; und
ein zweites Bild zu erhalten, das von der zweiten Aufnahmevorrichtung aufgenommen wurde, wobei das erste Bild und das zweite Bild demselben Zeitpunkt entsprechen und das zweite Bild einem zweiten Überwachungsbereich entspricht, der dem zweiten Sichtfeld entspricht; und

ein Verschmelzungsmodul, das so konfiguriert ist, dass es durch Verschmelzen des ersten Bildes und des zweiten Bildes ein Zielbild erzeugt, wobei das Verschmelzungsmodul, zum Erzeugen eines Zielbildes durch Verschmelzen des ersten Bildes und des zweiten Bildes, weiter zu Folgendem konfiguriert ist:

Bestimmen eines Überlappungsbereichs zwischen dem ersten Bild und dem zweiten Bild durch Abgleichen von Merkmalspunkten im ersten Bild mit Merkmalspunkten im zweiten Bild unter Verwendung eines Merkmalsabgleichalgorithmus;
Identifizieren von Fahrbahnmarkierungen in einem Überlappungsbereich zwischen dem ersten Überwachungsbereich und dem zweiten Überwachungsbereich;
Bestimmen eines Bereichs zwischen zwei am weitesten voneinander entfernten Fahrbahnmarkierungen im Überlappungsbereich als Zielbereich und
Erzeugen des Zielbildes durch Aktualisieren, basierend auf dem zweiten Bild, der Bildinformationen des Zielbereichs im ersten Bild, was Folgendes einschließt:

Bestimmen einer Korrespondenzbeziehung zwischen dem ersten Bild und dem zweiten Bild; wobei sich die Korrespondenzbeziehung zwischen dem ersten Bild und dem zweiten Bild auf eine Korrespondenzbeziehung zwischen Koordinaten von Pixeln des zweiten Bildes und Koordinaten entsprechender Pixel im ersten Bild bezieht;
Bestimmen eines transformierten zweiten Bildes, das dem zweiten Bild entspricht, basierend auf der Korrespondenzbeziehung;
Bestimmen einer ersten Gewichtung in Bezug auf die Helligkeit zum Bestimmen von Helligkeitswerten von Pixeln im Zielbild auf der Grundlage von Pixeln im Zielbereich im ersten Bild und entsprechenden Pixeln des transformierten zweiten Bildes;
Bestimmen einer zweiten Gewichtung in Bezug auf die Farbe zum Bestimmen von Farbwerten von Pixeln im Zielbild auf der Grundlage von Pixeln im Zielbereich im ersten Bild und entsprechenden Pixeln des transformierten zweiten Bildes;
Bestimmen einer dritten Gewichtung in Bezug auf eine Hochfrequenzkomponente zum Bestimmen der Hochfrequenzkomponente im Zielbild auf der Grundlage von Hochfrequenzkomponenten im Zielbereich im ersten Bild und Hochfrequenzkomponenten des transformierten zweiten Bildes;
wobei die Ziel-Hochfrequenzkomponente des Zielbereichs im Zielbild nach einer Formel unten bestimmt wird:

$$H_{Tk}=H_{1k}*(1-W_{3k})+H_{2k}*W_{3k,}$$

wobei sich $H_{Tk}$ auf einen Zielamplitudenwert einer Hochfrequenzkomponente $k$ im Zielbereich des Zielbildes bezieht, sich $H_{1k}$ auf einen ersten Amplitudenwert einer Hochfrequenzkomponente, die der Hochfrequenzkomponente $k$ im ersten Bild entspricht, bezieht, sich $H_{2k}$ auf einen zweiten Amplituden-

wert einer Hochfrequenzkomponente, die der Hochfrequenzkomponente $k$ im transformierten zweiten Bild entspricht, bezieht, und sich $w_{3k}$ auf die dritte Gewichtung, die der Hochfrequenzkomponente $k$ entspricht, bezieht;

und

Erzeugen des Zielbildes durch Aktualisieren, basierend auf der ersten Gewichtung, der zweiten Gewichtung, der dritten Gewichtung und dem transformierten zweiten Bild, der Bildinformationen des Zielbereichs im ersten Bild, wobei die ersten Pixelwerte des Zielbereichs im ersten Bild basierend auf zweiten Pixelwerten, die dem Zielbereich im transformierten zweiten Bild entsprechen, aktualisiert werden.

2. System nach Anspruch 1, wobei ein Winkel zwischen einer ersten optischen Achse der ersten Erfassungsvorrichtung und einer zweiten optischen Achse der zweiten Erfassungsvorrichtung innerhalb eines Bereichs von 0° bis 15° liegt.

3. System nach Anspruch 1 oder Anspruch 2, wobei das erste FOV zumindest einen Teil des zweiten FOV abdeckt.

4. System nach einem der Ansprüche 1-3, wobei das Verschmelzungsmodul, zum Bestimmen des Zielbereichs, weiter zu Folgendem konfiguriert ist:

Anpassen einer Größe des ersten Bildes oder einer Größe des zweiten Bildes und

Bestimmen des Zielbereichs basierend auf dem angepassten ersten Bild oder dem angepassten zweiten Bild.

5. System nach einem der Ansprüche 1-4, wobei die erste Erfassungsvorrichtung und die zweite Erfassungsvorrichtung vertikal oder horizontal angeordnet sind.

6. Verfahren, das auf einer Datenverarbeitungsvorrichtung umgesetzt wird, die zumindest eine Speichervorrichtung und zumindest einen Prozessor einschließt, wobei das Verfahren Folgendes umfasst:

Erhalten eines ersten Bildes, das von einer ersten Aufnahmevorrichtung aufgenommen wurde, wobei die erste Aufnahmevorrichtung eine erste Brennweite und ein erstes Sichtfeld (FOV) aufweist, und das erste Bild einem ersten Überwachungsbereich entspricht, der dem ersten FOV entspricht;

Erhalten eines zweiten Bildes, das von einer zweiten Aufnahmevorrichtung aufgenommen wurde, wobei die zweite Aufnahmevorrichtung eine zweite Brennweite und ein zweites FOV aufweist, wobei die zweite Brennweite größer ist als die erste Brennweite und das zweite FOV kleiner ist als das erste FOV, das zweite Bild einem zweiten Überwachungsbereich entspricht, der dem zweiten FOV entspricht, und das erste Bild und das zweite Bild demselben Zeitpunkt entsprechen; und

Erzeugen eines Zielbildes durch Verschmelzen des ersten Bildes und des zweiten Bildes, wobei das Erzeugen eines Zielbildes durch Verschmelzen des ersten Bildes und des zweiten Bildes Folgendes einschließt:

Bestimmen eines Überlappungsbereichs zwischen dem ersten Bild und dem zweiten Bild durch Abgleichen von Merkmalspunkten im ersten Bild mit Merkmalspunkten im zweiten Bild mithilfe eines Merkmalsabgleichalgorithmus;

Identifizieren von Fahrbahnmarkierungen in einem Überlappungsbereich zwischen dem ersten Überwachungsbereich und dem zweiten Überwachungsbereich;

Bestimmen eines Bereichs zwischen zwei am weitesten voneinander entfernten Fahrbahnmarkierungen im Überlappungsbereich als Zielbereich und

Erzeugen des Zielbildes durch Aktualisieren, basierend auf dem zweiten Bild, der Bildinformationen des Zielbereichs im ersten Bild, was Folgendes einschließt:

Bestimmen einer Korrespondenzbeziehung zwischen dem ersten Bild und dem zweiten Bild; wobei sich die Korrespondenzbeziehung zwischen dem ersten Bild und dem zweiten Bild auf eine Korrespondenzbeziehung zwischen Koordinaten von Pixeln des zweiten Bildes und Koordinaten entsprechender Pixel im ersten Bild bezieht;

Bestimmen eines transformierten zweiten Bildes, das dem zweiten Bild entspricht, basierend auf der Korrespondenzbeziehung;

Bestimmen einer ersten Gewichtung in Bezug auf die Helligkeit zum Bestimmen von Helligkeitswerten von Pixeln im Zielbild auf der Grundlage von Pixeln im Zielbereich im ersten Bild und entsprechenden Pixeln des transformierten zweiten Bildes;

Bestimmen einer zweiten Gewichtung in Bezug auf die Farbe zum Bestimmen von Farbwerten von Pixeln im Zielbild auf der Grundlage von Pixeln im Zielbereich im ersten Bild und entsprechenden Pixeln des transformierten zweiten Bildes;

Bestimmen einer dritten Gewichtung in Bezug auf eine Hochfrequenzkomponente zum Bestimmen der Hochfrequenzkomponente im Zielbild auf der Grundlage von Hochfrequenzkomponenten im Zielbereich im ersten Bild und Hochfrequenzkomponenten des transformierten zweiten Bildes;

wobei die Ziel-Hochfrequenzkomponente des Zielbereichs im Zielbild nach einer Formel unten bestimmt wird:

$$H_{Tk}=H_{1k}*(1-W_{3k})+H_{2k}*W_{3k,}$$

wobei sich $H_{Tk}$ auf einen Zielamplitudenwert einer Hochfrequenzkomponente $k$ im Zielbereich des Zielbildes bezieht, sich $H_{1k}$ auf einen ersten Amplitudenwert einer Hochfrequenzkomponente, die der Hochfrequenzkomponente $k$ im ersten Bild entspricht, bezieht, sich $H_{2k}$ auf einen zweiten Amplitudenwert einer Hochfrequenzkomponente, die der Hochfrequenzkomponente $k$ im transformierten zweiten Bild entspricht, bezieht, und sich $w_{3k}$ auf die dritte Gewichtung, die der Hochfrequenzkomponente $k$ entspricht, bezieht;

und

Erzeugen des Zielbildes durch Aktualisieren, basierend auf der ersten Gewichtung, der zweiten Gewichtung, der dritten Gewichtung und dem transformierten zweiten Bild, der Bildinformationen des Zielbereichs im ersten Bild, wobei die ersten Pixelwerte des Zielbereichs im ersten Bild basierend auf zweiten Pixelwerten, die dem Zielbereich im transformierten zweiten Bild entsprechen, aktualisiert werden.

7. Verfahren nach Anspruch 6, wobei ein Winkel zwischen einer ersten optischen Achse der ersten Erfassungsvorrichtung und einer zweiten optischen Achse der zweiten Erfassungsvorrichtung im Bereich von 0° bis 15° liegt.

8. Verfahren nach Anspruch 6 oder 7, wobei das erste FOV zumindest einen Teil des zweiten FOV abdeckt.

9. Verfahren nach einem der Ansprüche 6-8, wobei das Bestimmen des Zielbereichs Folgendes umfasst:

Anpassen einer Größe des ersten Bildes oder einer Größe des zweiten Bildes und
Bestimmen des Zielbereichs basierend auf dem angepassten ersten Bild oder dem angepassten zweiten Bild.

10. Verfahren nach einem der Ansprüche 6-9, wobei die erste Erfassungsvorrichtung und die zweite Erfassungsvorrichtung vertikal oder horizontal angeordnet sind.

11. Nichtflüchtiges computerlesbares Medium, das ausführbare Anweisungen umfasst, die, wenn sie von zumindest einem Prozessor ausgeführt werden, den zumindest einen Prozessor anleiten, ein Verfahren durchzuführen, wobei das Verfahren Folgendes umfasst:

Erhalten eines ersten Bildes, das von einer ersten Aufnahmevorrichtung aufgenommen wurde, wobei die erste Aufnahmevorrichtung eine erste Brennweite und ein erstes Sichtfeld (FOV) aufweist, und das erste Bild einem ersten Überwachungsbereich entspricht, der dem ersten FOV entspricht;

Erhalten eines zweiten Bildes, das von einer zweiten Aufnahmevorrichtung aufgenommen wurde, wobei die zweite Aufnahmevorrichtung eine zweite Brennweite und ein zweites FOV aufweist, wobei die zweite Brennweite größer ist als die erste Brennweite und das zweite FOV kleiner ist als das erste FOV, das zweite Bild einem zweiten Überwachungsbereich entspricht, der dem zweiten FOV entspricht, und das erste Bild und das zweite Bild demselben Zeitpunkt entsprechen; und

Erzeugen eines Zielbildes durch Verschmelzen des ersten Bildes und des zweiten Bildes, wobei das Erzeugen eines Zielbildes durch Verschmelzen des ersten Bildes und des zweiten Bildes Folgendes einschließt:

Bestimmen eines Überlappungsbereichs zwischen dem ersten Bild und dem zweiten Bild durch Abgleichen von Merkmalspunkten im ersten Bild mit Merkmalspunkten im zweiten Bild mithilfe eines Merkmalsabgleichalgorithmus;

Identifizieren von Fahrbahnmarkierungen in einem Überlappungsbereich zwischen dem ersten Überwachungsbereich und dem zweiten Überwachungsbereich;

Bestimmen eines Bereichs zwischen zwei am weitesten voneinander entfernten Fahrbahnmarkierungen im Überlappungsbereich als Zielbereich und

Bestimmen eines transformierten zweiten Bildes, das dem zweiten Bild entspricht, basierend auf der Korrespondenzbeziehung; was Folgendes einschließt:

Bestimmen einer Korrespondenzbeziehung zwischen dem ersten Bild und dem zweiten Bild; wobei sich die Korrespondenzbeziehung zwischen dem ersten Bild und dem zweiten Bild auf eine Korrespondenzbeziehung zwischen Koordinaten von Pixeln des zweiten Bildes und Koordinaten entsprechender Pixel im ersten Bild bezieht;

Bestimmen eines transformierten zweiten Bildes, das dem zweiten Bild entspricht, basierend auf der Korrespondenzbeziehung;

Bestimmen einer ersten Gewichtung in Bezug auf die Helligkeit zum Bestimmen von Helligkeitswerten von Pixeln im Zielbild auf der Grundlage von Pixeln im Zielbereich im ersten Bild und entsprechenden Pixeln des transformierten zweiten Bildes;

Bestimmen einer zweiten Gewichtung in Bezug auf die Farbe zum Bestimmen von Farbwerten von Pixeln im Zielbild auf der Grundlage von Pixeln im Zielbereich im ersten Bild und entsprechenden Pixeln des transformierten zweiten Bildes;

Bestimmen einer dritten Gewichtung in Bezug auf eine Hochfrequenzkomponente zum Bestimmen der Hochfrequenzkomponente im Zielbild auf der Grundlage von Hochfrequenzkomponenten im Zielbereich im ersten Bild und Hochfrequenzkomponenten des transformierten zweiten Bildes;

wobei die Ziel-Hochfrequenzkomponente des Zielbereichs im Zielbild nach einer Formel unten bestimmt wird:

$$H_{Tk}=H_{1k}*(1-W_{3k})+H_{2k}*W_{3k},$$

wobei sich $H_{Tk}$ auf einen Zielamplitudenwert einer Hochfrequenzkomponente k im Zielbereich des Zielbildes bezieht, sich $H_{1k}$ auf einen ersten Amplitudenwert einer Hochfrequenzkomponente, die der Hochfrequenzkomponente k im ersten Bild entspricht, bezieht, sich $H_{2k}$ auf einen zweiten Amplitudenwert einer Hochfrequenzkomponente, die der Hochfrequenzkomponente k im transformierten zweiten Bild entspricht, bezieht, und sich $W_{3k}$ auf die dritte Gewichtung, die der Hochfrequenzkomponente k entspricht, bezieht;

und

Erzeugen des Zielbildes durch Aktualisieren, basierend auf der ersten Gewichtung, der zweiten Gewichtung, der dritten Gewichtung und dem transformierten zweiten Bild, der Bildinformationen des Zielbereichs im ersten Bild, wobei die ersten Pixelwerte des Zielbereichs im ersten Bild basierend auf zweiten Pixelwerten, die dem Zielbereich im transformierten zweiten Bild entsprechen, aktualisiert werden.

**Revendications**

1. Système, comprenant :

un premier dispositif de capture avec une première distance focale et un premier champ de vision (FOV) ;
un deuxième dispositif de capture avec une deuxième distance focale et un deuxième champ de vision, dans lequel la deuxième distance focale est plus grande que la première distance focale et le deuxième champ de vision est plus petit que le premier champ de vision ;
un module d'acquisition configuré pour

obtenir une première image capturée par le premier dispositif de capture, la première image correspondant à une première région de surveillance qui correspond au premier champ de vision ; et
obtenir une seconde image capturée par le second dispositif de capture, dans lequel la première image et la seconde image correspondent au même instant, et la seconde image correspond à une seconde région de surveillance qui correspond au second champ de vision ; et

un module de fusion configuré pour générer une image cible en fusionnant la première image et la seconde image, dans lequel, pour générer une image cible en fusionnant la première image et la seconde image, le module de fusion est en outre configuré pour :

déterminer une région de chevauchement entre la première image et la seconde image en faisant correspondre des points caractéristiques de la première image avec des points caractéristiques de la seconde image à l'aide d'un algorithme de correspondance de caractéristiques ;

identifier les lignes de voie dans une zone de chevauchement entre la première zone de surveillance et la seconde zone de surveillance ;

déterminer une région située entre les deux lignes de voie les plus éloignées dans la zone de chevauchement comme une région cible ; et

générer l'image cible en mettant à jour, sur la base de la seconde image, les informations d'image de la région cible dans la première image, notamment :

déterminer une relation de correspondance entre la première image et la seconde image ; la relation de correspondance entre la première image et la seconde image faisant référence à une relation de correspondance entre les coordonnées des pixels de la seconde image et les coordonnées des pixels correspondants dans la première image ;

déterminer, sur la base de la relation de correspondance, une seconde image transformée correspondant à la seconde image ;

déterminer un premier poids relatif à la luminosité pour déterminer les valeurs de luminosité des pixels de l'image cible en fonction des pixels de la région cible dans la première image et des pixels correspondants de la seconde image transformée ;

déterminer un deuxième poids relatif à la couleur pour déterminer les valeurs de couleur des pixels de l'image cible en fonction des pixels de la région cible dans la première image et des pixels correspondants de la seconde image transformée ;

déterminer un troisième poids relatif à la composante haute fréquence pour déterminer la composante haute fréquence dans l'image cible en fonction des composantes haute fréquence dans la région cible de la première image et des composantes haute fréquence de la seconde image transformée ;

la composante haute fréquence cible de la région cible dans l'image cible est déterminée selon la formule ci-dessous :

$$H_{Tk}=H_{1k}*(1-W_{3k})+H_{2k}*W_{3k}$$

où $H_{Tk}$ désigne la valeur d'amplitude cible d'une composante haute fréquence k dans la région cible de l'image cible, $H_{1k}$ désigne une première valeur d'amplitude d'une composante haute fréquence correspondant à la composante haute fréquence k dans la première image, $H_{2k}$ désigne la seconde valeur d'amplitude d'une composante haute fréquence correspondant à la composante haute fréquence k dans la seconde image transformée, et $W_{3k}$ désigne le troisième poids correspondant à la composante haute fréquence $k$ ;

et

générer l'image cible en mettant à jour, sur la base du premier poids, du deuxième poids, du troisième poids et de la seconde image transformée, les informations d'image de la région cible dans la première image, dans lequel les premières valeurs de pixels de la région cible dans la première image sont mises à jour sur la base des secondes valeurs de pixels correspondant à la région cible dans la seconde image transformée.

2. Système selon la revendication 1, dans lequel un angle entre un premier axe optique du premier dispositif de capture et un second axe optique du second dispositif de capture est compris entre 0° et 15°.

3. Système selon la revendication 1 ou la revendication 2, dans lequel le premier champ de vision couvre au moins une partie du second champ de vision.

4. Système selon l'une quelconque des revendications 1 à 3, dans lequel, pour déterminer la région cible, le module de fusion est en outre configuré pour :

ajuster la taille de la première image ou la taille de la seconde image ; et
déterminer la région cible à partir de la première image ajustée ou de la seconde image ajustée.

5. Système selon l'une quelconque des revendications 1 à 4, dans lequel le premier dispositif de capture et le second dispositif de capture sont agencés verticalement ou horizontalement.

6. Procédé mis en œuvre sur un dispositif informatique incluant au moins un dispositif de stockage et au moins un processeur, le procédé comprenant :

l'obtention d'une première image capturée par un premier dispositif de capture, le premier dispositif de capture présentant une première distance focale et un premier champ de vision (FOV), et la première image correspondant à une première région de surveillance qui correspond au premier FOV ;

l'obtention d'une seconde image capturée par un second dispositif de capture, ce second dispositif présentant une seconde distance focale et un second champ de vision, dans lequel la seconde distance focale est supérieure à la première, le second champ de vision inférieur au premier, la seconde image correspond à une seconde zone de surveillance correspondant au second champ de vision, et la première et la seconde image correspondent au même instant ; et

la génération d'une image cible par fusion de la première et de la seconde image, dans lequel la génération d'une image cible par fusion de la première et de la seconde image inclut :

la détermination d'une région de chevauchement entre la première image et la seconde image en faisant correspondre les points caractéristiques de la première image avec les points caractéristiques de la seconde image à l'aide d'un algorithme de correspondance de caractéristiques ;

l'identification de lignes de voie dans une zone de chevauchement entre la première zone de surveillance et la seconde zone de surveillance ;

la détermination d'une région située entre les deux lignes de voie les plus éloignées dans la zone de chevauchement comme une région cible ; et

la génération de l'image cible par une mise à jour, à partir de la seconde image, des informations d'image de la région cible dans la première image, notamment :

la détermination d'une relation de correspondance entre la première image et la seconde image ; la relation de correspondance entre la première image et la seconde image faisant référence à une relation de correspondance entre les coordonnées des pixels de la seconde image et les coordonnées des pixels correspondants dans la première image ;

la détermination, sur la base de la relation de correspondance, d'une seconde image transformée correspondant à la seconde image ;

la détermination d'un premier poids relatif à la luminosité pour déterminer les valeurs de luminosité des pixels de l'image cible en fonction des pixels de la région cible dans la première image et des pixels correspondants de la seconde image transformée ;

la détermination d'un second poids relatif à la couleur pour déterminer les valeurs de couleur des pixels de l'image cible en fonction des pixels de la région cible dans la première image et des pixels correspondants de la seconde image transformée ;

la détermination d'un troisième poids relatif à la composante haute fréquence pour déterminer la composante haute fréquence dans l'image cible en fonction des composantes haute fréquence dans la région cible de la première image et des composantes haute fréquence de la seconde image transformée ;

la composante haute fréquence cible de la région cible dans l'image cible est déterminée selon la formule ci-dessous :

$$H_{Tk}=H_{1k}*(1-W_{3k})+H_{2k}*W_{3k}$$

où $H_{Tk}$ désigne la valeur d'amplitude cible d'une composante haute fréquence k dans la région cible de l'image cible, $H_{1k}$ désigne une première valeur d'amplitude d'une composante haute fréquence correspondant à la composante haute fréquence k dans la première image, $H_{2k}$ désigne la seconde valeur d'amplitude d'une composante haute fréquence correspondant à la composante haute fréquence k dans la seconde image transformée, et $W_{3k}$ désigne le troisième poids correspondant à la composante haute fréquence k ;
et

la génération de l'image cible en mettant à jour, sur la base du premier poids, du deuxième poids, du troisième poids et de la seconde image transformée, les informations d'image de la région cible dans la première image, dans laquelle les premières valeurs de pixels de la région cible dans la première image sont mises à jour sur la base des secondes valeurs de pixels correspondant à la région cible dans la seconde image transformée.

**7.** Procédé selon la revendication 6, dans lequel un angle entre un premier axe optique du premier dispositif de capture et un second axe optique du second dispositif de capture est compris entre 0° et 15°.

8. Procédé selon la revendication 6 ou 7, dans lequel le premier champ de vision couvre au moins une partie du second champ de vision.

9. Procédé selon l'une quelconque des revendications 6 à 8, dans lequel la détermination de la région cible comprend :

l'ajustement de la taille de la première image ou de la taille de la seconde image ; et
la détermination de la région cible à partir de la première image ajustée ou de la seconde image ajustée.

10. Procédé selon l'une quelconque des revendications 6 à 9, dans lequel le premier dispositif de capture et le second dispositif de capture sont disposés verticalement ou horizontalement.

11. Support non transitoire lisible par ordinateur, comprenant des instructions exécutables qui, lorsqu'elles sont exécutées par au moins un processeur, ordonnent à l'au moins un processeur de réaliser un procédé, le procédé comprenant :

l'obtention d'une première image capturée par un premier dispositif de capture, le premier dispositif de capture présentant une première distance focale et un premier champ de vision (FOV), et la première image correspondant à une première région de surveillance qui correspond au premier FOV ;
l'obtention d'une seconde image capturée par un second dispositif de capture, le second dispositif présentant une seconde distance focale et un second champ de vision, dans lequel la seconde distance focale est supérieure à la première, le second champ de vision est inférieur au premier, la seconde image correspond à une seconde zone de surveillance correspondant au second champ de vision, et la première et la seconde image correspondent au même instant ; et
la génération d'une image cible par fusion de la première image et de la seconde image, dans lequel la génération d'une image cible par fusion de la première image et de la seconde image inclut :

la détermination d'une région de chevauchement entre la première image et la seconde image en faisant correspondre les points caractéristiques de la première image avec les points caractéristiques de la seconde image à l'aide d'un algorithme de correspondance de caractéristiques ;
l'identification des lignes de voie dans une zone de chevauchement entre la première zone de surveillance et la seconde zone de surveillance ;
la détermination d'une région située entre les deux lignes de voie les plus éloignées dans la zone de chevauchement comme une région cible ; et
la génération de l'image cible en mettant à jour, sur la base de la seconde image, les informations d'image de la région cible dans la première image, y compris

la détermination d'une relation de correspondance entre la première image et la seconde image ; la relation de correspondance entre la première image et la seconde image faisant référence à une relation de correspondance entre les coordonnées des pixels de la seconde image et les coordonnées des pixels correspondants dans la première image ;
la détermination, sur la base de la relation de correspondance, d'une seconde image transformée correspondant à la seconde image ;
la détermination d'un premier poids relatif à la luminosité pour déterminer les valeurs de luminosité des pixels de l'image cible en fonction des pixels de la région cible dans la première image et des pixels correspondants de la seconde image transformée ;
la détermination d'un deuxième poids relatif à la couleur pour déterminer les valeurs de couleur des pixels de l'image cible en fonction des pixels de la région cible dans la première image et des pixels correspondants de la seconde image transformée ;
la détermination d'un troisième poids relatif à la composante haute fréquence pour déterminer la composante haute fréquence dans l'image cible en fonction des composantes haute fréquence dans la région cible de la première image et des composantes haute fréquence de la seconde image transformée ;
la composante haute fréquence cible de la région cible dans l'image cible est déterminée selon la formule ci-dessous :

$$H_{Tk}=H_{1k}*(1-W_{3k})+H_{2k}*W_{3k}$$

où $H_{Tk}$ désigne la valeur d'amplitude cible d'une composante haute fréquence k dans la région cible de l'image cible, $H_{1k}$ désigne une première valeur d'amplitude d'une composante haute fréquence correspondant à la composante haute fréquence k dans la première image, $H_{2k}$ désigne la seconde valeur d'amplitude d'une composante haute fréquence correspondant à la composante haute fréquence k dans la seconde image transformée, et $W_{3k}$ désigne le troisième poids correspondant à la composante haute fréquence k ;
et
la génération de l'image cible en mettant à jour, sur la base du premier poids, du deuxième poids, du troisième poids et de la seconde image transformée, les informations d'image de la région cible dans la première image, dans lequel les premières valeurs de pixels de la région cible dans la première image sont mises à jour sur la base des secondes valeurs de pixels correspondant à la région cible dans la seconde image transformée.

**FIG. 1**

<u>200</u>

270

260

250

DISK

I/O

COM
PORTS

To/From a
Network

210

Bus

220

230

240

Processor

ROM

RAM

**FIG. 2**

<u>300</u>

**FIG. 3**

**121**

Obtaining Module
410

Fusion Module
420

**FIG. 4**

500

Obtaining a first image captured by a first capture device — 510

Obtaining a second image captured by a second capture device — 520

Generating a target image by fusing the first image and the second image — 530

FIG. 5

Long-focal
Capture Device
<u>112</u>

Wide-angle
Capture Device
<u>111</u>

A

B1
(B2)

C1
(C2)

D

**FIG. 6**

D · · · · · · · · · · D

Cl - - - - - - - - - Cl

Bl · · · · · · · · · Bl

A · · · · · · · · · · A

First Image
<u>710</u>

+

C2 C2

B2 B2

Second Image
(or Transformed Second Image)
<u>720</u>

=

D · · · · · · · · · · D

C2 C2

B2 · · · · · · · · B2

A · · · · · · · · · · A

Target Image
<u>730</u>

**FIG. 7**

**420**

Target Region Determination Unit
810

Relationship Determination Unit
820

Transformation Unit
830

Generation Unit
840

**FIG. 8**

900

```
┌─────────────────────────────────────────────────────┐
│  Determining a target region in a first image based │  ~ 910
│  on the first image and a second image               │
└─────────────────────────────────────────────────────┘
                          │
                          ▼
┌─────────────────────────────────────────────────────┐
│  Determining a correspondence relationship between   │  ~ 920
│  the first image and the second image                │
└─────────────────────────────────────────────────────┘
                          │
                          ▼
┌─────────────────────────────────────────────────────┐
│  Determining, based on the correspondence            │  ~ 930
│  relationship, a transformed second image            │
│  corresponding to the second image                   │
└─────────────────────────────────────────────────────┘
                          │
                          ▼
┌─────────────────────────────────────────────────────┐
│  Generating a target image by updating, based on the │  ~ 940
│  transformed second image, image information of the  │
│  target region in the first image                    │
└─────────────────────────────────────────────────────┘
```

**FIG. 9**

**REFERENCES CITED IN THE DESCRIPTION**

**Patent documents cited in the description**

- US 2018096487 A1
- US 2010013927 A1
- WO 2014083489 A1
- US 2008174670 A1